# FASCICULE DE BREVET EUROPEEN

(11) **EP 1 225 077 B1**
(45) Date de publication et mention de la délivrance du brevet: **07.07.2004**
(21) Numéro de dépôt: 02290148.2
(22) Date de dépôt: 21.01.2002
(51) Int. Cl.: B60K 20/08

(54) **Ensemble de levier de commande de boite de vitesses d'un v-hicule**
Schalthebelvorrichtung für Kraftfahrzeugschaltgetriebe
Control lever assembly for vehicle gearbox

(30) Priorité: 22.01.2001 FR 0100792
(43) Date de publication de la demande: 24.07.2002
(73) Titulaire: Peugeot Citroen Automobiles, 92200 Neuilly Sur Seine (FR)
(72) Inventeur: Cazes, Christophe, 75009 Paris (FR); Landet, Thierry, 92250 La Garenne Colombes (FR)
(74) Mandataire: Timoney, Ian Charles Craig (GB)

(56) Documents cités:
- EP-A- 0 560 134
- EP-A- 0 745 501
- JP-A- 62 008 210

## Description

La présente invention se rapporte à un ensemble de levier de commande de boîte de vitesses d'un véhicule, selon le préambule de la revendication 1 et tel que connu du document EP-A-0 560 134.

Les véhicules automobiles munis de trois places côte à côte à l'avant deviennent de plus en plus courant. Ce type de véhicule peut transporter soit le conducteur seul, soit le conducteur et un passager, soit le conducteur accompagné de deux passagers. Typiquement, lorsque le conducteur n'est accompagné que d'un passager, celui-ci se met de préférence dans la place extérieure des trois places avant. Dans le cas où le conducteur roule seul ou n'est accompagné que du passager de droite, le levier de vitesse qui est monté de manière classique sur le plancher au milieu du véhicule, lui est facilement accessible. En revanche, dès lors qu'un troisième passager occupe la place du milieu, sa présence, et en particulier, ses genoux, gênent le conducteur lorsqu'il essaye d'actionner le levier de vitesse.

Ce type de problème peut se présenter également lorsque le véhicule est équipé d'un levier de vitesses monté sur le tableau de bord, au milieu du véhicule.

La demanderesse s'est fixé pour objectifs de surmonter les difficultés et les inconvénients rappelés ci-dessus et rencontrés dans l'art antérieur en proposant un ensemble de levier de commande de boîte de vitesses d'un véhicule qui est facilement accessible par le conducteur du véhicule, que le véhicule transporte un seul ou deux passagers à l'avant.

Aussi, la présente invention a trait à un ensembje de levier de commande de boîte de vitesses selon la revendication 1.

D'autres caractéristiques et avantages de la présente invention vont maintenant être décrits de manière plus détaillée à l'aide des dessins annexés donnés à titre illustratif et non limitatif et dans lesquels,
la Figure 1 représente, en vue de côté schématique, l'intérieur d'un véhicule équipé d'un ensemble de levier de commande de vitesses selon la présente invention
la Figure 2 est une vue schématique d'un ensemble de levier de commande de vitesses selon l'invention.
la Figure 3 est une section prise selon la ligne III -III de la Figure 2 et
la Figure 4 est une vue, analogue à celle de la Figure 1, d'un véhicule équipé d'un ensemble de levier de commande de vitesses selon un deuxième mode de réalisation de l'invention.

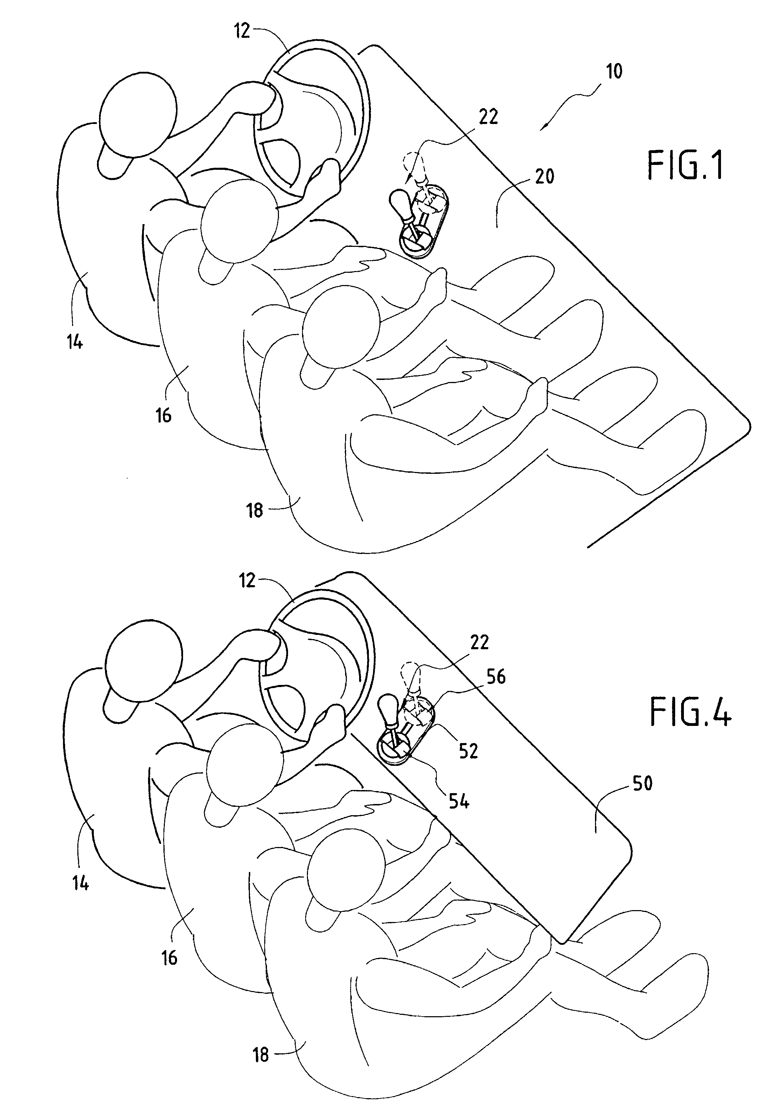

La figure 1 représente, en vue de côté schématique, l'intérieur d'un véhicule 10, muni d'un volant 12, qui comprend trois places côte à côte 14, 16 et 18 dont seuls les passagers sont représentés. Le véhicule 10 comporte un plancher 20 sur lequel est monté un ensemble de levier de commande de vitesses 22.

Le véhicule peut transporter soit le conducteur 14 seul, soit le conducteur 14 et le passager de droite 18 soit le conducteur 14 et les deux passagers 16 et 18. Typiquement, lorsque le conducteur n'est accompagné que d'un passager 18, celui-ci se met de préférence dans la place extérieure de droite. Dans le cas où le conducteur 14 roule seul ou n'est accompagné que du passager de droite 18, le levier de vitesse, monté de manière classique sur le plancher 20 du véhicule, lui est facilement accessible. En revanche, dès qu'un troisième passager 16 occupe la place du milieu, sa présence gène le conducteur lorsqu'il essaye d'actionner le levier de vitesse.

Selon l'invention, afin de rendre le levier de vitesse accessible au conducteur 14 que le véhicule transporte un ou deux passagers à l'avant, le levier fait partie d'un ensemble qui est déplaçable par rapport au plancher du véhicule.

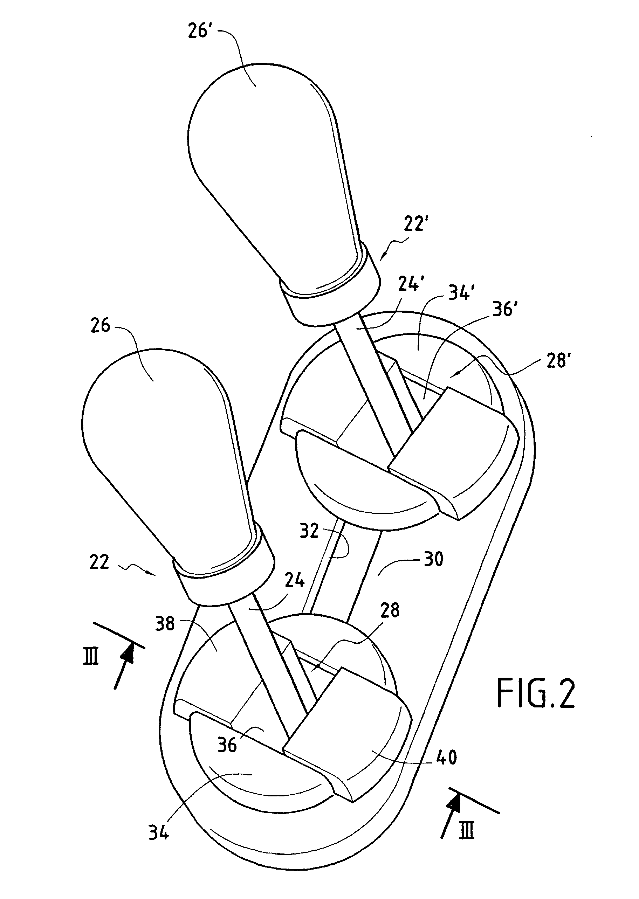

Comme il est représenté plus en détail sur la Figure 2, l'ensemble de levier de commande de boîte de vitesses 22 comprend un levier 24 muni d'un pommeau 26. Le levier 24 est monté dans une articulation 28 et peut être déplacé entre au moins deux positions par le conducteur 14. L'articulation 28 comporte des capteurs électromagnétiques (non-représentés) agencés pour changer les vitesses du véhicule lorsque le conducteur agit sur le levier 24. L'ensemble comprend de plus un support 30 qui, dans l'exemple de la Figure 1, est monté solidaire au plancher 20 du véhicule, et qui comporte une ouverture longitudinale 32. De préférence, le support 30 est formé d'une plaque métallique. Selon l'invention, l'ensemble de levier de commande de boîte de vitesses 22 est déplaçable par rapport au support 30 par coulissement dans l'ouverture 32

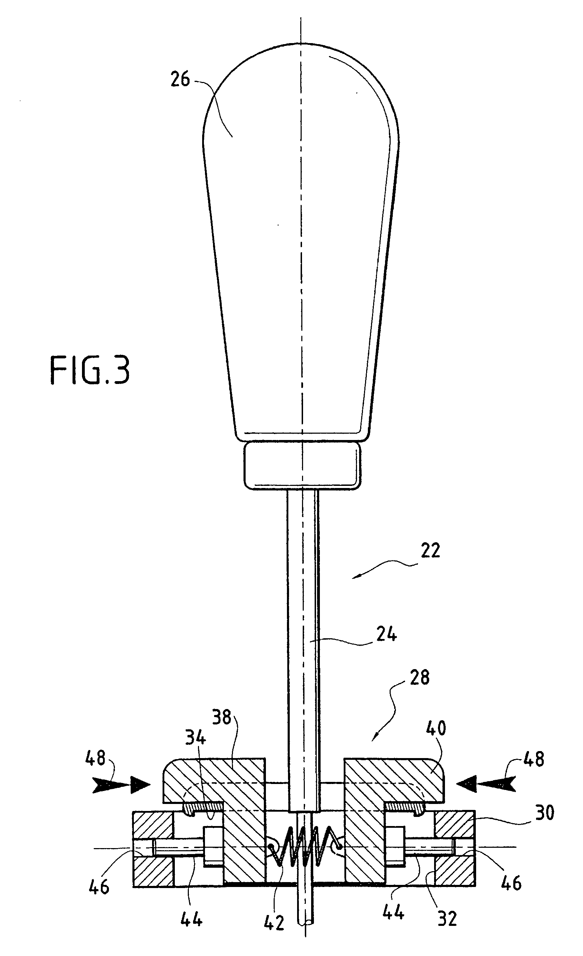

La Figure 2 représente l'ensemble de levier 22 dans ses deux positions, celle 22 qui est sa position classique dans laquelle il se trouve lorsque le conducteur roule seul ou accompagné du passager 18, et sa position déportée 22' (les autres chiffres de référence étant également primés) qui est adopté quand un passager 16 se trouve à la place du milieu. L'ensemble de levier 22 comprend de plus des moyens de blocage en translation destinés à retenir l'ensemble dans l'une ou l'autre de ses positions illustrées sur la Figure 2. Ces moyens sont représentés sur la Figure 3 qui est une section prise selon la ligne III-III de la Figure 2.

L'articulation 28 de l'ensemble de levier 22 comprend un structure 34 sensiblement circulaire dans lequel est formée une ouverture 36. Deux éléments 38, 40, sensiblement similaires, sont montés dans la structure 34 afin de pouvoir coulisser selon la ligne III-III de la Figure 2, mais sont sollicités vers leurs positions représentées sur les Figures 2 et 3 par un ressort 42. Chaque élément 38,40 comporte un ergot 44. Le support 30 comprend des paires d'ouvertures opposées 46 disposées à chacune des positions 24 et 24' de la Figure 2, qui sont adaptées à recevoir les ergots 44 afin de bloquer l'articulation 28 en translation dans l'une des positions représentées sur la Figure 2.

Pour déplacer le levier de vitesses d'une des positions de la Figure 2 vers l'autre, il suffit qu'un opérateur appuie simultanément sur les deux éléments 38, 40 dans le sens des flèches 48 pour dégager les ergots 44 des ouvertures 46 ce qui a pour effet de rendre l'articulation 28 libre de coulisser dans l'ouverture 32 du support 30. Une fois l'articulation 28 dans sa position désirée, l'opérateur relâche les éléments 38,40 permettant aux ergots 44 de venir engager les ouvertures 46 et bloquer l'articulation dans sa nouvelle position.

Un deuxième mode de réalisation de l'invention est représenté sur la Figure 4. Dans ce mode de réalisation, l'ensemble de levier de commande de boîte de vitesses 22 est monté sur le tableau de bord 50 du véhicule, plutôt que sur le plancher tel que dans le mode de réalisation de la Figure 1. Lorsque le levier est monté sur le tableau de bord 50, les problèmes rencontrés avec le mode de réalisation de la Figure 1 lorsque le passager 16 s'installe dans le véhicule peuvent se reproduire. Ainsi, l'ensemble de levier, dont la structure et le fonctionnement sont sensiblement analogues à ceux du mode de réalisation précédent, est monté sur un support 52 qui épouse la forme du tableau de bord 50.

Dans le cas où le conducteur 14 roule seul ou n'est accompagné que du passager de droite 18, le levier de vitesse, monté dans sa position basse 54 sur le tableau de bord 50 du véhicule, lui est facilement accessible En revanche, dès qu'un troisième passager 16 occupe la place du milieu, l'ensemble de levier est déplacé vers le haut sur le tableau de bord 50 pour se trouver dans sa position 56 afin que le conducteur puisse toujours l'actionner facilement.

## Revendications

1. Ensemble de levier de commande de boîte de vitesses (22) comprenant un support (30) destiné à être monté sur un véhicule, une articulation (28) montée sur le support, et un levier (24), monté sur le support (30) au moyen de l'articulation (28) afin d'être déplaçable manuellement entre au moins une première et une seconde positions, le levier et l'articulation étant déplaçables ensemble par rapport au support (30), le support (30) étant formé avec une ouverture (32) dans laquelle peuvent coulisser le levier (24) et l'articulation (28) et comprenant de plus des moyens de blocage destinés à retenir l'ensemble (22) dans une position donnée par rapport au support (30), **caractérisé en ce que** les moyens de blocage comprennent deux éléments similaires (38, 40) montés afin de pouvoir coulisser sur l'articulation (28), chacun comportant un ergot (44), le support (30) comprenant des paires d'ouvertures opposées (46), les ergots étant agencés pour engager des ouvertures (46) sous l'effet d'un ressort (42) afin de bloquer l'articulation (28) en translation.

2. Ensemble selon la revendication 1 **caractérisé en ce que** le support (30) est agencé pour être monté sur le plancher (20) d'un véhicule.

3. Ensemble selon la revendication 1 **caractérisé en ce que** le support (30) est agencé pour être monté sur le tableau de bord (50) d'un véhicule.

## Patentansprüche

1. Schalthebelvorrichtung für Fahrzeuggetriebe (22) mit einem Träger (30), der an einem Fahrzeug montiert wird, mit einem Gelenk (28), das am Träger montiert ist, und mit einem Hebel (24), der mittels des Gelenks (28) am Träger (30) montiert ist, um sich manuell zwischen mindestens einer ersten und einer zweiten Position verschieben zu lassen, wobei der Hebel und das Gelenk zusammen gegenüber dem Träger (30) verschiebbar sind, wobei der Träger (30) mit einer Öffnung (32) versehen ist, in der der Hebel (24) und das Gelenk (28) verschiebbar sind, und außerdem Mittel zum Blockieren vorgesehen sind, die die Vorrichtung (22) in einer bestimmten Position gegenüber dem Träger (30) halten, **dadurch gekennzeichnet, dass** die Mittel zum Blockieren zwei ähnliche Elemente (38, 40) aufweisen, die so montiert sind, dass sie am Gelenk (28) verschiebbar sind und jeweils einen Vorsprung (44) aufweisen, wobei der Träger (30) Paare von einander gegenüber liegenden Öffnungen (46) aufweist und die Vorsprünge so angeordnet sind, dass sie sich unter der Wirkung einer Feder (42) in die Öffnungen (46) einfügen, um das Gelenk (28) gegen eine Verschiebung zu blockieren.

2. Vorrichtung nach Anspruch 1, **dadurch gekennzeichnet, dass** der Träger (30) am Boden (20) eines Fahrzeugs montiert werden kann.

3. Vorrichtung nach Anspruch 1, **dadurch gekennzeichnet, dass** der Träger (30) am Instrumentenbrett (50) eines Fahrzeugs montiert werden kann.

## Claims

1. Gear box control lever assembly (22) comprising a support (30) intended to be mounted on a vehicle, an articulation (28) mounted on the support, and a lever (24), mounted on the support (30) by means of the articulation (28) so as to be displaceable manually between at least a first and a second position, the lever and the articulation being displaceable together with respect to the support (30), the support (30) being formed with an opening (32) in which the lever (24) and the articulation (28) can slide and further comprising locking means intended to retain the assembly (22) in a given position with respect to the support (30), **characterised in that** the locking means comprise two similar elements (38, 40) mounted so as to be able to slide over the articulation (28), each comprising a lug (44), the support (30) comprising pairs of opposite openings (46), the lugs being arranged so as to engage openings (46) under the effect of a spring (42) so as to lock the articulation (28) in translation.

2. Assembly according to Claim 1 **characterised in that** the support (30) is arranged so as to be mounted on the floor (20) of a vehicle.

3. Assembly according to Claim 1 **characterised in that** the support (30) is arranged so as to be mounted on the dashboard (50) of a vehicle.
